# EUROPEAN PATENT APPLICATION

(11) **EP 4 382 218 A1**
(43) Date of publication of application: **12.06.2024**
(21) Application number: 22851012.9
(22) Date of filing: 14.07.2022
(51) Int. Cl.: B08B 3/04, B08B 13/00, C01B 33/02

(54) **CLEANING BASKET**

(30) Priority: 06.08.2021 JP 2021130346
(71) Applicant: Tokuyama Corporation, Shunan-shi, Yamaguchi 745-8648 (JP)
(72) Inventor: ICHITSUBO, Koki, Shunan-shi, Yamaguchi 745-8648 (JP)
(74) Representative: Bittner, Thomas L.
(86) International application number: PCT/JP2022/027647
(87) International publication number: WO 2023/013378

(57) **Abstract**

In order to reduce an amount of a cleaning liquid remaining in a cleaning basket and to improve efficiency of drying polycrystalline silicon accommodated in the cleaning basket, a cleaning basket (1) is used for at least one of cleaning and drying of polycrystalline silicon in a state in which the polycrystalline silicon is accommodated and includes: a bottom plate (2) provided with a plurality of through holes formed therein; oblique plates (3) each of which has an inner surface (33) that makes, with an upper surface (23) of the bottom plate (2), an angle (θ1) of not less than 10° and not more than 80°, the oblique plates (3) each being connected to the bottom plate (2) and inclining in an upward and outward direction: and respective side plates (4) which are connected to the oblique plates (3) and which extend in an upward direction. (Fig. 3)

## Description

### Technical Field

The present invention relates to a cleaning basket.

### Background

Patent Literature 1 discloses a cleaning basket for cleaning polycrystalline silicon in a state in which the polycrystalline silicon is accommodated in the cleaning basket. The cleaning basket is provided with a plurality of through holes formed in a bottom plate part thereof and a plurality of through holes formed in a peripheral wall part thereof. The through holes formed in the peripheral wall part each have an inner peripheral surface having a bottom portion that has an inclined surface which gradually inclines downward from an inner side to an outer side. This allows the cleaning basket disclosed in Patent Literature 1 to prevent a cleaning liquid from remaining in the cleaning basket as much as possible when the polycrystalline silicon is washed, and to prevent generation of an oxide stain on the polycrystalline silicon.

### Citation List

[Patent Literature 1]
Japanese Patent Application Publication Tokukai No. 2009-62204

### Summary

### Technical Problem

In the cleaning basket disclosed in Patent Literature 1, the through holes formed in the peripheral wall part each have an inner peripheral surface having a bottom portion which has the inclined surface. Such a configuration for preventing the cleaning liquid from remaining in the cleaning basket has room for improvement. It is an object of an aspect of the present invention to reduce an amount of a cleaning liquid remaining in a cleaning basket and to improve efficiency of drying polycrystalline silicon accommodated in the cleaning basket.

### Solution to Problem

In order to solve the foregoing problem, a cleaning basket in accordance with an aspect of the present invention is a cleaning basket used for at least one of cleaning and drying of polycrystalline silicon in a state in which the polycrystalline silicon is accommodated in the cleaning basket, the cleaning basket including: a bottom plate provided with a plurality of through holes formed therein; oblique plates each of which has an inner surface that makes, with an upper surface of the bottom plate, an angle of not less than 10° and not more than 80°, the oblique plates each being connected to the bottom plate and inclining in an upward and outward direction; and side plates which are connected to the oblique plates and which extend in an upward direction, the bottom plate, the oblique plates, and the side plates forming an accommodation space accommodating the polycrystalline silicon.

### Advantageous Effects of Invention

According to an aspect of the present invention, it is possible to both reduce a cleaning liquid remaining in a cleaning basket and improve efficiency of drying polycrystalline silicon accommodated in the cleaning basket.

### Brief Description of Drawings

- Fig. 1: is a side view illustrating a cleaning basket in accordance with Embodiment 1 of the present invention.
- Fig. 2: is a front view illustrating the cleaning basket illustrated in Fig. 1.
- Fig. 3: is a cross-sectional view of the cleaning basket illustrated in Fig. 1, taken along A1-A1 line.
- Fig. 4: is a plan view illustrating the cleaning basket illustrated in Fig. 1.
- Fig. 5: is a view illustrating a configuration of a bottom plate which is included in the cleaning basket illustrated in Fig. 4.
- Fig. 6: is a cross-sectional view illustrating bottom plates any one of which is included in a cleaning basket in accordance with Embodiment 2 of the present invention.
- Fig. 7: is a cross-sectional view illustrating cleaning baskets in accordance with Embodiment 3 of the present invention.

### Description of Embodiments

### Embodiment 1

### <Method for Producing Polycrystalline Silicon>

A method for producing polycrystalline silicon to be cleaned includes, for example, a silicon depositing step of depositing polycrystalline silicon by reacting a chlorosilane compound and hydrogen in a reactor. The Siemens process is known as a method for depositing polycrystalline silicon. In the Siemens process, trichlorosilane and hydrogen are reacted in a bell-shaped (bell-jar) reactor. Then, polycrystalline silicon is deposited on the surface of a core rod which is for polycrystalline silicon deposition and which is provided so as to set up inside the reactor, so that a grown polycrystalline silicon rod is obtained.

The method for producing the polycrystalline silicon may further include the step of crushing the polycrystalline silicon rod obtained in the silicon depositing step and the step of classifying the polycrystalline silicon thus crushed. Furthermore, the method for producing the polycrystalline silicon includes a cleaning step of cleaning the polycrystalline silicon crushed or the polycrystalline silicon classified and a drying step of drying the polycrystalline silicon cleaned.

### <Method for Cleaning Polycrystalline Silicon>

In the cleaning step, fluonitric acid as a cleaning liquid is brought into contact with the polycrystalline silicon. The "fluonitric acid" refers to an aqueous solution in which nitric acid and hydrogen fluoride are mixed. On the polycrystalline silicon taken out of the reactor, usually, an oxide layer containing a contaminant may be formed, due to natural oxidation, so as to have a thickness of several nanometers. The oxide layer is a layer made of SiO₂. Bringing this polycrystalline silicon into contact with the fluonitric acid causes a reaction as follows.

Mainly due to the action of the hydrogen fluoride, the surface of the polycrystalline silicon is etched and the oxide layer present on the surface is removed. Meanwhile, mainly due to the action of the nitric acid, a new oxide layer is formed on the surface of the polycrystalline silicon. Simultaneous progression of (i) removal of the oxide layer and (ii) formation of the new oxide layer causes the polycrystalline silicon to be etched, so that the contaminant adhered to the surface of the polycrystalline silicon and the contaminant incorporated in the polycrystalline silicon are removed. Such a contaminant include, for example, organic substances, metal, and resin. Major examples of the metal that can be contaminants or impurities encompass Na, Mg, Al, K, Ca, Cr, Fe, Ni, Co, Cu, Zn, and W.

Specific examples of a method for bringing the fluonitric acid into contact with the polycrystalline silicon encompass a method in which a cleaning basket 1 accommodating the polycrystalline silicon is immersed into a first cleaning bath filled with the fluonitric acid. The cleaning basket 1 will be described later. After the cleaning basket 1 has been immersed in the first cleaning bath, the cleaning basket 1 is taken out of the first cleaning bath and is then immersed into a second cleaning bath filled with ultrapure water. This can wash away the fluonitric acid adhered to the polycrystalline silicon.

After the cleaning basket 1 has been immersed in the second cleaning bath, the cleaning basket 1 is taken out of the second cleaning bath and is then accommodated in a drying machine in the drying step described above. The polycrystalline silicon accommodated in the cleaning basket 1 is dried by hot air from the drying machine. The drying machine blows the hot air to the cleaning basket 1 from above the cleaning basket 1.

The polycrystalline silicon used as, for example, a raw material for semiconductors or a raw material for solar cells needs to be highly pure. Specifically, in a case where a slight amount of heavy metal is adhered to a surface of polycrystalline silicon or in a case where an appearance defect, such as a stain, on a surface of polycrystalline silicon is found after the cleaning step or the drying step, such polycrystalline silicon is regarded as a defective product. In order to keep the polycrystalline silicon highly pure, the method for producing the highly pure polycrystalline silicon needs to be achieved with multiple elaborate measures against the contamination.

### <Configuration of Cleaning Basket 1>

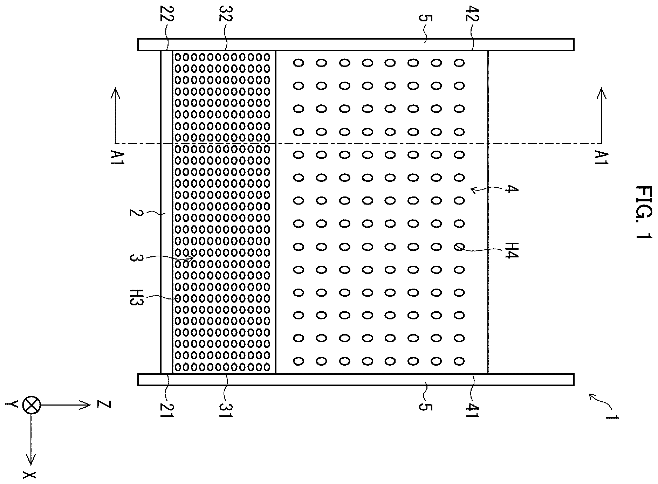

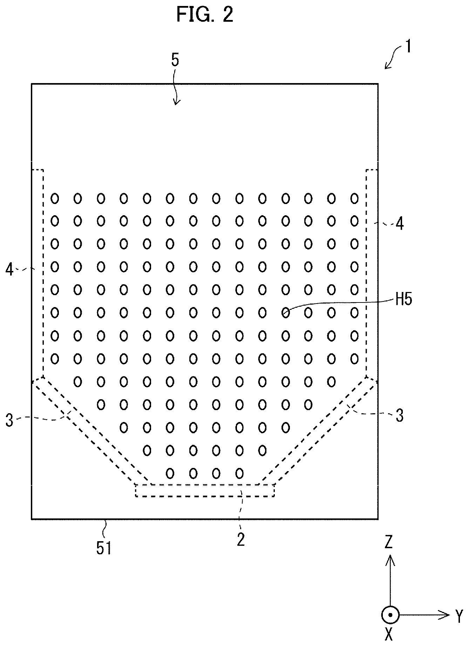

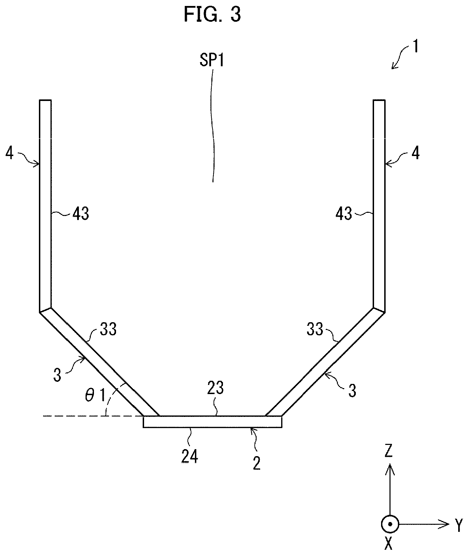

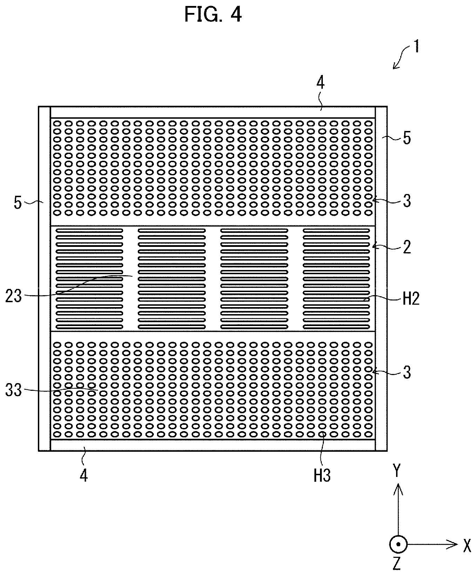

Fig. 1 is a side view illustrating the cleaning basket 1 in accordance with Embodiment 1 of the present invention. Fig. 2 is a front view illustrating the cleaning basket 1 illustrated in Fig. 1. Fig. 3 is a cross-sectional view of the cleaning basket 1 illustrated in Fig. 1, taken along line A1-A1. Fig. 4 is a plan view illustrating the cleaning basket 1 illustrated in Fig. 1. In Fig. 1, a direction in which two side plates 5 are aligned is an X-axis direction, an upward direction perpendicular to a bottom plate 2 is a positive direction of a Z axis, and a direction in which two side plates 4 are aligned is a Y-axis direction. The X-axis direction, the Y-axis direction, and a Z-axis direction are orthogonal to each other.

The cleaning basket 1 is used for cleaning and/or drying of polycrystalline silicon in a state in which the polycrystalline silicon is accommodated in the cleaning basket 1. That is, the cleaning basket 1 is used in the above-described cleaning step and/or the above-described drying step. As illustrated in Fig. 1, the cleaning basket 1 includes the bottom plate 2, oblique plates 3, the side plates 4, and the side plates 5. In Figs. 1 to 4, one bottom plate 2, two oblique plates 3, two side plates 4, and two side plates 5 are illustrated, but the number of each of these plates is an example.

The bottom plate 2 has an edge 21 on a positive direction side of the X axis and an edge 22 on a negative direction side of the X axis. Connecting the edge 21 and the edge 22 to the side plates 5 allows the side plates 5 to support the bottom plate 2. The oblique plates 3 have respective edges 31 on the positive direction side of the X axis and respective edges 32 on the negative direction side of the X axis. Connecting the edges 31 and the edges 32 to the side plates 5 allows the side plates 5 to support the oblique plates 3. The oblique plates 3 are each provided with a plurality of through holes H3 formed therein.

The side plates 4 have respective edges 41 on the positive direction side of the X axis and respective edges 42 on the negative direction side of the X axis. Connecting the edges 41 and the edges 42 to the side plates 5 allows the side plates 5 to support the side plates 4. The side plates 4 are each provided with a plurality of through holes H4 formed therein. Note that scope of application of an aspect of the present invention is not limited to the cleaning basket 1 having the side plates 4 each provided with the through holes H4, but an aspect of the present invention is applicable to a cleaning basket having side plates 4 provided with no through holes H4 formed therein.

In a case where the side plates 4 are each provided with the plurality of through holes H4, a fluid in the cleaning basket 1 is easily dispersed in the Y-axis direction, as compared with a case where the side plates 4 are not each provided with the plurality of through holes H4. This makes it easier for the fluid in the cleaning basket 1 to drain out of the cleaning basket 1. Thus, it is possible for a cleaning liquid in the cleaning basket 1 to more quickly drain out of the cleaning basket 1. In addition, it is possible to improve efficiency of drying portions of the polycrystalline silicon accommodated in the cleaning basket 1 which portions are located in the vicinities of the side plates 4.

The plurality of through holes H4 each have a diameter of preferably not less than 2 mm and not more than 10 mm and more preferably not less than 4 mm and not more than 6 mm in order to achieve, in a well-balanced manner, drainage of a liquid and air and prevention of falling of the polycrystalline silicon through the through holes.

The plurality of through holes H4 each have an inner peripheral surface that is an inclined surface which inclines downward from an inner side of the cleaning basket 1 to an outer side of the cleaning basket 1. An angle between a negative direction of the Z axis and a direction in which the inner peripheral surface of each of the plurality of through holes H4 extends is preferably not less than 10° and not more than 80° and particularly preferably not less than 30° and not more than 60°. This makes it easy for the fluid passing through the plurality of through holes H4 to flow out of the cleaning basket 1 along the inclined surfaces.

The side plates 5 are each connected to the bottom plate 2, the oblique plates 3, and the side plates 4 and extend in an upward direction, that is, in a positive direction of the Z axis. In addition, as illustrated in Fig. 2, the side plates 5 are each provided with a plurality of through holes H5 formed therein in a position on a positive direction side of the Z axis relative to a connection part between the bottom plate 2 and the side plate 5 and a connection part between the oblique plate 3 and the side plate 5.

The plurality of through holes H5 each have a diameter of preferably not less than 2 mm and not more than 10 mm and more preferably not less than 4 mm and not more than 6 mm in order to achieve, in a well-balanced manner, the drainage of a liquid and air and the prevention of falling of polycrystalline silicon through the through holes.

The plurality of through holes H5 each have an inner peripheral surface that is an inclined surface which inclines downward from an inner side of the cleaning basket 1 to an outer side of the cleaning basket 1. An angle between the negative direction of the Z axis and a direction in which the inner peripheral surface of each of the plurality of through holes H5 extends is preferably not less than 10° and not more than 80° and particularly preferably not less than 30° and not more than 60°. The side plates 5 each have an edge 51 on a negative direction side of the Z axis. The edge 51 of each of the side plates 5 is located on the negative direction side of the Z axis relative to the connection part between the bottom plate 2 and the side plate 5. This makes it possible for a fluid to drain out of the cleaning basket 1 through the plurality of through holes H2 (described later) of the bottom plate 2.

As illustrated in Fig. 3, the bottom plate 2 has an upper surface 23, and the oblique plates 3 each have an inner surface 33. An angle θ1 between the upper surface 23 of the bottom plate 2 and the inner surface 33 of each of the oblique plates 3 is not less than 10° and not more than 80° and more preferably not less than 30° and not more than 75°. The oblique plates 3 are each connected to the bottom plate 2 and incline in an upward and outward direction and. The angle θ1 is, in other words, an acute angle between a plane including the upper surface 23 of the bottom plate 2 and a plane including the inner surface 33 of each of the oblique plates 3.

This allows the fluid in the cleaning basket 1 to flow toward the center of the bottom plate 2 along the oblique plates 3. This can makes it easy for the fluid to drain through the plurality of through holes H2 provided in the bottom plate 2. Thus, it is possible to reduce an amount of the cleaning liquid remaining in the cleaning basket 1 and to improve the efficiency of drying the polycrystalline silicon accommodated in the cleaning basket 1. In addition, it is possible to reduce a risk of the occurrence of a remainder of the liquid which is likely to occur near corners at which the bottom plate 2 is connected to lower edges of the side plates 5 and to lower edges of the oblique plates 3.

Further, connecting the oblique plates 3 in inclined states to the bottom plate 2 causes a load of the polycrystalline silicon accommodated in the cleaning basket 1 to be applied dispersedly to the bottom plate 2 and the oblique plates 3. This makes it possible to reduce the load applied by the polycrystalline silicon to the bottom plate 2. Thus, it is possible to reduce a risk that the bottom plate 2 may deform due to the load. In addition, in a case where the cleaning basket 1 accommodates the polycrystalline silicon, a pressure loss occurs due to a long distance between an upper end of the polycrystalline silicon and the bottom plate 2. Thus, it is preferable that the fluid easily drain through the plurality of through holes H2 of the bottom plate 2.

The plurality of through holes H3 each have a diameter of preferably not less than 2 mm and not more than 10 mm and more preferably not less than 4 mm and not more than 6 mm in order to achieve, in a well-balanced manner, the drainage of the liquid and air and the prevention of falling of polycrystalline silicon through the through holes. The plu rality of through holes H3 each have an inner peripheral surface which is provided in the oblique plate 3 so as to extend in a direction perpendicular to the inner surface 33 of the oblique plate 3. Note that, alternatively, the inner peripheral surface of each of the plurality of through holes H3 may be provided in the oblique plate 3 so as to extend in the negative direction of the Z axis.

The side plates 4 are connected to the respective oblique plates 3 and extend in an upward direction, that is, in the positive direction of the Z axis. Note that the "upward direction" which is a direction in which the side plates 4 extend does not necessarily refer to the positive direction of the Z axis but may also refer to a direction which inclines from the positive direction of the Z axis. This will be described in Embodiment 3 in more detail. In addition, the bottom plate 2, the oblique plates 3, and the side plates 4 form an accommodation space SP1 for accommodating the polycrystalline silicon.

As illustrated in Fig. 4, a longer-side direction of the bottom plate 2 and longer-side directions of the oblique plates 3 are the same as the X-axis direction, and a shorter-side direction of the bottom plate 2 and shorter-side directions of the oblique plates 3 are the same as the Y-axis direction. The bottom plate 2 is provided with the plurality of through holes H2 aligned in the X-axis direction and the Y-axis direction. The plurality of through holes H2 may be round holes but are preferably long holes extending in the X-axis direction. The plurality of through holes H2 are formed so as to be longer in the X-axis direction than the plurality of through holes H3. This makes it possible to increase a bottom-plate aperture ratio which is a ratio of a total of aperture areas of the plurality of through holes H2 provided in the bottom plate 2, relative to an area of the upper surface 23 of the bottom plate 2.

In a case where the plurality of through holes H2 are round holes, the plurality of through holes H2 each have a diameter of preferably not less than 2 mm and not more than 10 mm and more preferably not less than 4 mm and not more than 6 mm in order to achieve, in a well-balanced manner, the drainage of the liquid and air and the prevention of falling of the polycrystalline silicon through the through holes. On the other hand, in a case where the plurality of through holes H2 are the long holes, the plurality of through holes H2 each have a width of preferably not less than 1 mm and not more than 4 mm, for the same reason. Further, the plurality of through holes H2 each have a length of preferably not less than 10 mm and not more than 200 mm and more preferably not less than 20 mm and not more than 100 mm.

Further, since the oblique plates 3, as well as the bottom plate 2, are each provided with the plurality of through holes H3, it is easier for the fluid in the cleaning basket 1 to drain out of the cleaning basket 1, as compared with a case where only the bottom plate 2, among the bottom plate 2, the oblique plates 3, and the side plates 4 and 5, is provided with a plurality of through holes formed therein. Thus, it is possible for a cleaning liquid in the cleaning basket 1 to more quickly drain out of the cleaning basket 1. In addition, it is possible to improve efficiency of drying portions of the polycrystalline silicon accommodated in the cleaning basket 1 which portions are located in the vicinities of the oblique plates 3.

The bottom-plate aperture ratio is preferably not less than 10% and not more than 50% and more preferably not less than 15% and not more than 35%. This makes it possible to both maintain a sufficient strength of the bottom plate 2 and make it easy for the fluid to drain through the plurality of through holes H2 provided in the bottom plate 2. More specifically, the bottom-plate aperture ratio refers to a ratio of the total of the aperture areas of the plurality of through holes H2 provided in the bottom plate 2, relative to the area of the upper surface 23 of a case where the through holes H2 are not provided in the bottom plate 2.

Further, the bottom-plate aperture ratio is preferably not smaller than an oblique-plate aperture ratio which is a ratio of a total of aperture areas of the plurality of through holes H3 provided in each of the oblique plates 3, relative to an area of the inner surface 33 of each of the oblique plate 3. This can make it easier for the fluid to drain through the plurality of through holes H2 provided in the bottom plate 2 than through the plurality of through holes H3 provided in each of the oblique plates 3. Therefore, it is possible for the fluid in the vicinity of the bottom plate 2 where the fluid is difficult to drain to efficiently drain through the plurality of through holes H2 provided in the bottom plate 2, while the fluid is caused to drain through the plurality of through holes H3 provided in each of the oblique plates 3.

More specifically, the oblique-plate aperture ratio refers to a ratio of the total of the aperture areas of the plurality of through holes H3 provided in each of the oblique plates 3, relative to the area of the inner surface 33 of a case where the through holes H3 are not provided in the oblique plates 3.

Further, the oblique-plate aperture ratio is preferably not smaller than a side-plate aperture ratio which is a ratio of a total of aperture areas of the plurality of through holes H4 provided in each of the side plates 4, relative to an area of an inner surface 43 of each of the side plates 4. This can makes it easier for the fluid to drain through the plurality of through holes H3 provided in each of the oblique plates 3 than through the plurality of through holes H4 provided in each of the side plates 4. Thus, the aperture ratios of the side plate 4, the oblique plate 3, and the bottom plate 2 are larger in this order. Therefore, it is possible for the fluid to efficiently drain through the plurality of through holes provided in the side plates 4, the plurality of through holes provided in the oblique plates 3, and the plurality of through holes provided in the bottom plate 2.

In a case where each of the side plates 4, each of the oblique plates 3, and the bottom plate 2 have the same aperture ratio, hot air blown to the cleaning basket 1 toward the negative direction of the Z axis is expelled through each of the side plates 4, each of the oblique plates 3, and the bottom plate 2 more easily in this order. In contrast, in a case where the aperture ratios of the side plate 4, the oblique plate 3, and the bottom plate 2 are larger in this order, it is possible to achieve uniformity of easy expelling of air through each of the side plates 4, each of the oblique plates 3, and the bottom plate 2. This makes it possible for the fluid to efficiently drain through the plurality of through holes provided in the side plates 4, the plurality of through holes provided in the oblique plates 3, and the plurality of through holes provided in the bottom plate 2.

More specifically, the side-plate aperture ratio refers to a ratio of the total of aperture areas of the plurality of through holes H4 provided in each of the side plates 4, relative to the area of the inner surface 43 of a case where the through holes H4 are not provided in the side plates 4.

Further, the oblique-plate aperture ratio is preferably not less than 60% and not more than 100% of the bottom-plate aperture ratio and more preferably not less than 70% and not more than 85% of the bottom-plate aperture ratio. This can make it easier for the fluid to drain through the plurality of through holes H2 provided in the bottom plate 2 than through the plurality of through holes H3 provided in each of the oblique plates 3, while sufficient strengths of the oblique plates 3 is maintained.

Furthermore, the side-plate aperture ratio is preferably not less than 10% and not more than 60% of the bottom-plate aperture ratio and more preferably not less than 20% and not more than 40% of the bottom-plate aperture ratio. This can make it easier for the fluid to drain through the plurality of through holes H2 provided in the bottom plate 2 than through the plurality of through holes H4 provided in each of the side plates 4, while sufficient strengths of the side plates 4 is maintained.

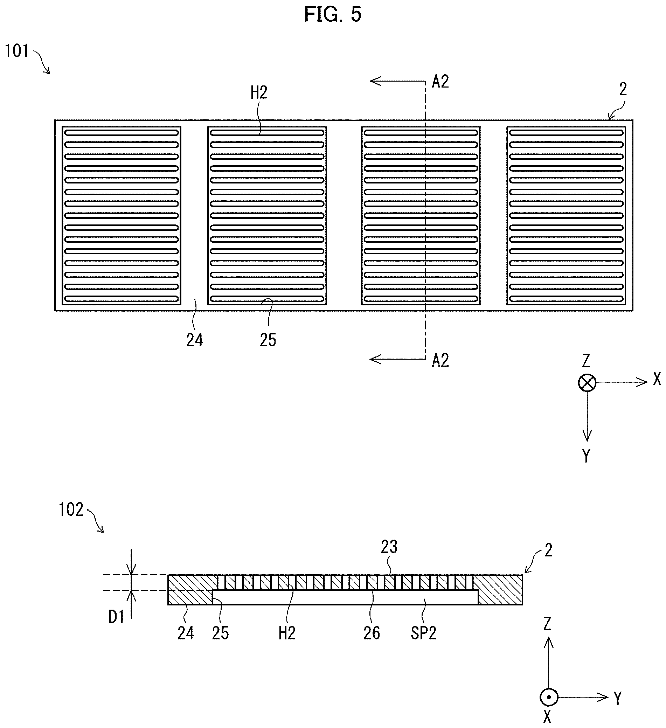

Fig. 5 is a view illustrating a configuration of the bottom plate 2 which is included in the cleaning basket 1 illustrated in Fig. 4. The reference numeral 101 of Fig. 5 indicates a view illustrating the bottom plate 2 as seen toward the positive direction of the Z axis, and the reference numeral 102 of Fig. 5 indicates a cross-sectional view of the bottom plate 2 illustrated in the reference numeral 101 of Fig. 5, taken along A2-A2 line. As illustrated in Fig. 3, the reference numeral 101 of Fig. 5, and the reference numeral 102 of Fig. 5, the bottom plate 2 has a lower surface 24.

The lower surface 24 of the bottom plate 2 is provided with recesses 25 so that a space SP2 is formed upwards from the lower surface 24. Each of the recesses 25 has an upper surface 26 provided with the through holes H2 which allow the upper surface 26 of the recess 25 and the upper surface 23 of the bottom plate 2 to communicate with each other. Accordingly, the spaces SP2 are formed by the recesses 25, below the plurality of through holes H2 provided in the bottom plate 2. Thus, since the fluid that has drained through the plurality of through holes H2 passes the spaces SP2, the fluid can easily and efficiently drain out of the cleaning basket 1. Further, it is possible to ensure a sufficient thickness of the bottom plate 2 in a portion in which the lower surface 24 is provided with no recesses 25. This makes it possible to maintain a sufficient strength of the bottom plate 2.

As described above, the plurality of through holes H2 provided in the bottom plate 2 allow the upper surface 23 of the bottom plate 2 and a surface of the bottom plate 2 opposite to the upper surface 23 of the bottom plate 2 to communicate each other, that is, the upper surface 23 of the bottom plate 2 and the upper surfaces 26 of the recesses 25 to communicate with each other. A distance D1 between the upper surface 23 of the bottom plate 2 and the upper surface 26 of each of the recesses 25 is preferably not less than 1 mm and not more than 8 mm and more preferably not less than 2 mm and not more than 6 mm. Note that, in a case where the lower surface 24 of the bottom plate 2 is provided with no recesses 25, the surface of the bottom plate 2 opposite to the upper surface 23 of the bottom plate 2 corresponds to the lower surface 24 of the bottom plate 2. In this case, a distance between the upper surface 23 of the bottom plate 2 and the lower surface 24 of the bottom plate 2 is preferably not less than 1 mm and not more than 8 mm and more preferably not less than 2 mm and not more than 6 mm.

In this way, a sufficient thickness of the bottom plate 2 is ensured in a portion provided with the through holes H2. This makes it possible to maintain a sufficient strength of the bottom plate 2. At the same time, it is possible to make it easy for the fluid to drain out of the cleaning basket 1 through the plurality of through holes H2 provided in the bottom plate 2.

### Embodiment 2

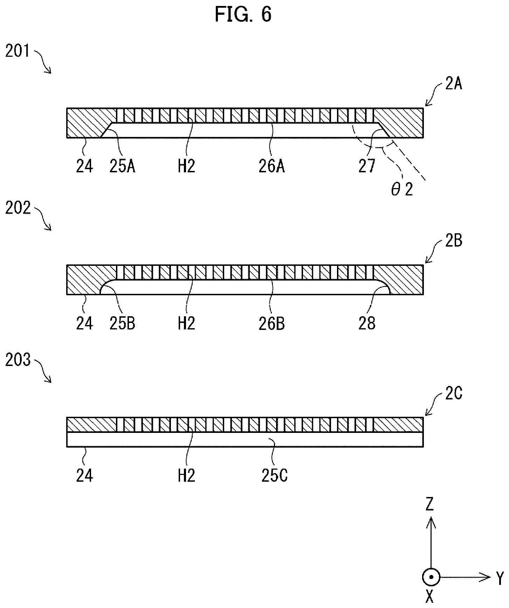

The following will describe Embodiment 2 of the present invention. Note that, for convenience of explanation, members identical in function to those described in Embodiment 1 are given identical reference numerals, and descriptions of such members are not repeated. Fig. 6 is a cross-sectional view illustrating each of bottom plates that is to be included in a cleaning basket in accordance with Embodiment 2 of the present invention. Fig. 6 shows a view in which, in the reference numeral 102 of Fig. 5, the bottom plate 2 is changed to a bottom plate 2A, a bottom plate 2B, or a bottom plate 2C. The reference numerals 201 to 203 of Fig. 6 indicate cross-sectional views respectively illustrating the bottom plates 2A to 2C. A cleaning basket in accordance with Embodiment 2 includes the bottom plate 2A, the bottom plate 2B, or the bottom plate 2C, instead of the bottom plate 2.

As illustrated in the reference numeral 201 of Fig. 6, the bottom plate 2A differs from the bottom plate 2 in that the lower surface 24 is provided with recesses 25A instead of the recesses 25. The recesses 25A have respective peripheral wall surfaces 27 each having a tapered shape that flares toward the negative direction of the Z axis. This makes it possible to reduce a risk that a fluid that has drained through the plurality of through holes H2 may collide with the peripheral wall surfaces 27. Thus, it is possible to make it easy for the fluid to efficiently drain out of the cleaning basket 1. Further, an angle θ2 between each of the peripheral wall surfaces 27 and an upper surface 26A of each of the recesses 25A is preferably not less than 90° and not more than 180° and more preferably not less than 120° and not more than 150°. The peripheral wall surfaces 27 are connected to respective peripheries of the upper surfaces 26A.

As illustrated in the reference numeral 202 of Fig. 6, the bottom plate 2B differs from the bottom plate 2 in that the lower surface 24 is provided with recesses 25B instead of the recesses 25. The recesses 25B have respective peripheral wall surfaces 28 each having a curved surface. The peripheral wall surfaces 28 are connected to respective peripheries of upper surfaces 26B of the recesses 25B.

As illustrated in the reference numeral 203 of Fig. 6, the bottom plate 2C differs from the bottom plate 2 in that the lower surface 24 is provided with recesses 25C instead of the recesses 25. The lower surface 24 is provided with a plurality of recesses 25C that are aligned in the X-axis direction. The recesses 25C are each formed so as to extend from one edge of the bottom plate 2C on a positive direction side of the Y axis to another edge of the bottom plate 2C on a negative direction side of the Y axis.

### Embodiment 3

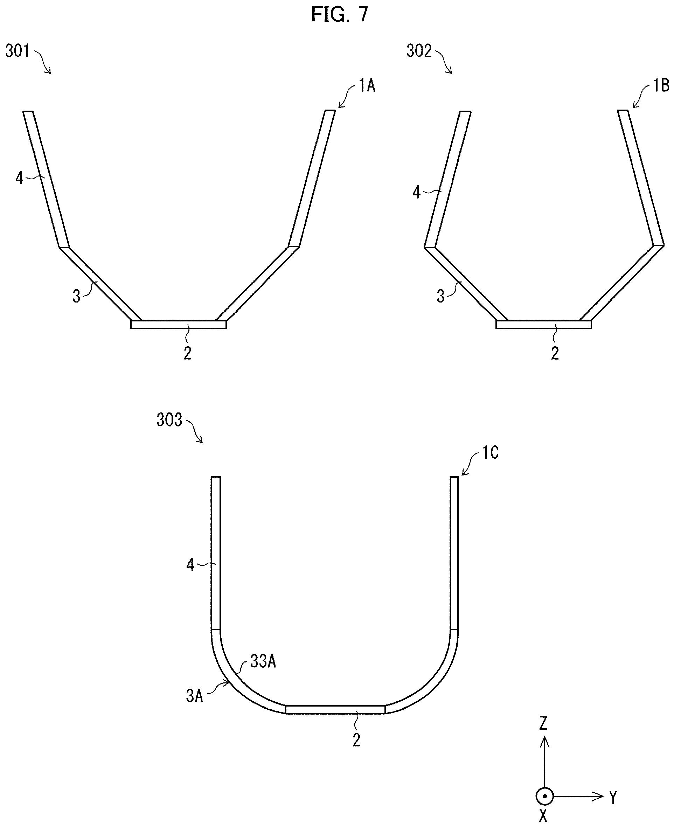

The following will describe Embodiment 3 of the present invention. Note that, for convenience of explanation, members identical in function to those described in Embodiment 1 are given identical reference numerals, and descriptions of such members are not repeated. Fig. 7 is a cross-sectional view which illustrates each of cleaning baskets in accordance with Embodiment 3 of the present invention and in which the cleaning basket 1 in Fig. 3 is changed to a cleaning basket 1A, a cleaning basket 1B, or a cleaning basket 1C. The reference numerals 301 to 303 of Fig. 7 indicate cross-sectional views respectively illustrating the cleaning baskets 1A to 1C. The cleaning basket in accordance with Embodiment 3 is any one of the cleaning baskets 1A to 1C.

As illustrated in the reference numeral 301 of Fig. 7, the cleaning basket 1A differs from the cleaning basket 1 in that the side plates 4 of the cleaning basket 1A are connected to the respective oblique plates 3 in a manner in which the side plates 4 each incline outward in an upward direction. As illustrated in the reference numeral 302 of Fig. 7, the cleaning basket 1B differs from the cleaning basket 1 in that the side plates 4 of the cleaning basket 1B are each connected to the oblique plate 3 in a manner in which the side plates 3 each incline inward in the upward direction. The upward direction which is a direction in which the side plates 4 extend does not necessarily refer to the positive direction of the Z axis but may also refer to a direction which inclines from the positive direction of the Z axis, as in the cleaning baskets 1A and 1B.

Further, as illustrated in the reference numeral 303 of Fig. 7, the cleaning basket 1C differs from the cleaning basket 1 in that the oblique plates 3 are changed to oblique plates 3A. The oblique plates 3A have respective inner surfaces 33A, each of which has a curved shape and a cross section that has an arc shape curving outward.

### [Example 1]

### <Cleaning and Drying of Polycrystalline Silicon>

A polycrystalline silicon rod produced through the Siemens process was crushed to pieces with use of a hammer. Polycrystalline silicon pieces thus obtained were accommodated in a cleaning basket. The cleaning basket accommodating the polycrystalline silicon pieces was then immersed in a first cleaning bath filled with fluonitric acid, so that the polycrystalline silicon pieces were cleaned. The cleaning basket was taken out of the first cleaning bath and was then immersed in a second cleaning bath filled with ultrapure water, so that the fluonitric acid adhered to the polycrystalline silicon pieces was washed away. The cleaning basket was taken out of the second cleaning bath and was then accommodated in a drying machine. As a result of blowing hot air at a temperature of 120°C from the drying machine to the polycrystalline silicon pieces accommodated in the cleaning basket for 20 minutes, the polycrystalline silicon pieces were completely dried.

### <Cleaning Basket>

Used was the cleaning basket that had: a bottom plate provided with a plurality of through holes formed therein; oblique plates each having an inner surface which made an angle of 45° with an upper surface of the bottom plate; and side plates which were connected to the oblique plates and which extended in an upward direction. In the cleaning basket used in Example 1, a bottom-plate aperture ratio was 25%, an oblique-plate aperture ratio was 18%, and a side-plate aperture ratio was 8%. In addition, a distance between the upper surface of the bottom plate and a surface of the bottom plate opposite to the upper surface of the bottom plate was 5 mm.

### <Evaluation of How Easily Cleaning Liquid Remained>

How easily a cleaning liquid remained in the cleaning basket was evaluated depending on whether, when the cleaning basket was taken out, there was an oxide stain that might be generated on surfaces of the polycrystalline silicon pieces after drying the polycrystalline silicon with use of the drying machine.

### <Evaluation of Drying Efficiency>

In Example 1, blowing hot air at a temperature of 120°C to the polycrystalline silicon pieces for 20 minutes caused the polycrystalline silicon pieces to be dried completely. At this time, temperatures at a plurality of parts of the cleaning basket were measured, and the temperatures at all measurement points of the plurality of parts were higher than 100°C. In light of this, as a drying time, measured was a period of time from a point in time when the hot air had started to be blown to the polycrystalline silicon pieces to a point in time when the temperatures at all the measurement points of the plurality of parts of the cleaning basket had become higher than 100°C. The drying time thus measured was used to evaluate drying efficiency. Table 1 shows evaluation results of Example 1.

**[Table 1]**

| | Angle between upper surface of bottom plate and oblique plate | Bottom-plate aperture ratio | Oblique-plate aperture ratio | Side-plate aperture ratio | Distance between upper surface of bottom plate and surface opposite to upper surface | Presence or absence of oxide stain after 20-minute drying | Drying time |
|---|---|---|---|---|---|---|---|
| Example 1 | 45° | 25% | 18% | 8% | 5mm | Absent | 20 minutes |
| Example 2 | 30° | 25% | 18% | 8% | 5mm | Absent | 20 minutes |
| Example 3 | 60° | 25% | 18% | 8% | 5mm | Absent | 20 minutes |
| Example 4 | 45° | 25% | 18% | 0% | 5mm | Absent | 20 minutes |
| Example 5 | 45° | 25% | 18% | 8% | 2mm | Absent | 18 minutes |
| Comparative Example 1 | 0° | 25% | 18% | 8% | 5mm | Present | 24 minutes |
| Comparative Example 2 | 90° | 25% | 18% | 8% | 5mm | Present | 24 minutes |

### [Examples 2 and 3]

In each of Examples 2 and 3, the polycrystalline silicon pieces were cleaned/washed and dried as in Example 1 except that each of the oblique plates included in the cleaning basket made, with the upper surface of the bottom plate, an angle shown in Table 1. Table 1 shows evaluation results of Examples 2 and 3.

### [Example 4]

In Example 4, the polycrystalline silicon pieces were cleaned/washed and dried as in Example 1 except that no through holes were provided in the side plates included in the cleaning basket. Table 1 shows evaluation results of Example 4.

### [Example 5]

In Example 5, the polycrystalline silicon pieces were cleaned/washed and dried as in Example 1 except that, in the cleaning basket, a distance between the upper surface of the bottom plate and a surface opposite to the upper surface took a value shown in Table 1. Table 1 shows the evaluation results of Example 5.

### [Comparative Examples 1 and 2]

In each of Comparative Examples 1 and 2, the polycrystalline silicon pieces were cleaned/washed and dried as in Example 1 except that each of the oblique plates included in the cleaning basket made, with the upper surface of the bottom plate, an angle shown in Table 1. Table 1 shows evaluation results of Comparative Examples 1 and 2. In both Comparative Examples 1 and 2, oxide stains generated were found on the polycrystalline silicon pieces that had been dried for 20 minutes. Further, the drying times of both Comparative Examples 1 and 2 were each needed to be approximately 1.2 times longer than the drying time of Example 1.

Aspects of the present invention can also be expressed as follows:
A cleaning basket in accordance with an aspect of the present invention is a cleaning basket used for at least one of cleaning and drying of polycrystalline silicon in a state in which the polycrystalline silicon is accommodated in the cleaning basket, the cleaning basket including: a bottom plate provided with a plurality of through holes formed therein; oblique plates each of which has an inner surface that makes, with an upper surface of the bottom plate, an angle of not less than 10° and not more than 80°, the oblique plates each being connected to the bottom plate and inclining in an upward and outward direction; and side plates which are connected to the oblique plates and which extend in an upward direction, the bottom plate, the oblique plates, and the side plates forming an accommodation space accommodating the polycrystalline silicon.

According to the above configuration, since a fluid in the cleaning basket flows toward the center of the bottom plate along the oblique plates, it is possible to make it easy for the fluid to drain through the plurality of through holes provided in the bottom plate. Thus, it is possible to reduce an amount of a cleaning liquid remaining in the cleaning basket and to improve the efficiency of drying the polycrystalline silicon accommodated in the cleaning basket. In addition, it is possible to reduce a risk of the occurrence of a remainder of the liquid at the bottom plate.

The oblique plates, as well as the bottom plate, may be each provided with a plurality of through holes formed therein. According to the above configuration, as compared with a configuration where only the bottom plate, among the bottom plate, the oblique plates, and the side plates, is provided with the plurality of through holes, since a fluid in the cleaning basket easily drains out of the cleaning basket, it is possible for a cleaning liquid in the cleaning basket to more quickly drain out of the cleaning basket. In addition, it is possible to improve efficiency of drying portions of the polycrystalline silicon accommodated in the cleaning basket which portions are located in the vicinities of the oblique plates.

A bottom-plate aperture ratio may be not smaller than an oblique-plate aperture ratio, the bottom-plate aperture ratio being a ratio of a total of aperture areas of the plurality of through holes provided in the bottom plate, relative to an area of the upper surface of the bottom plate, the oblique-plate aperture ratio being a ratio of a total of aperture areas of the plurality of through holes provided in each of the oblique plates, relative to an area of an inner surface of each of the oblique plates.

According to the above configuration, it is possible to make it easier for a fluid to drain through the plurality of through holes provided in the bottom plate than through the plurality of through holes provided in each of the oblique plates. Therefore, it is possible for the fluid in the vicinity of the bottom plate where the fluid is difficult to drain to efficiently drain through the plurality of through holes provided in the bottom plate, while the fluid is caused to drain through the plurality of through holes provided in each of the oblique plates.

The side plates, as well as the bottom plate and the oblique plates, may be each provided with a plurality of through holes formed therein. According to the above configuration, as compared with a configuration where the plurality of through holes are not provided in the side plates, since a fluid in the cleaning basket easily drains out of the cleaning basket, it is possible for a cleaning liquid in the cleaning basket to more quickly drain out of the cleaning basket. In addition, it is possible to improve efficiency of drying portions of the polycrystalline silicon accommodated in the cleaning basket which portions are located in the vicinities of the side plates.

The oblique-plate aperture ratio may be not smaller than a side-plate aperture ratio, which is a ratio of a total of aperture areas of the plurality of through holes provided in each of the side plates, relative to an area of an inner surface of each of the side plates. According to the above configuration, it is possible to make it easier for a fluid to drain through the plurality of through holes provided in each of the oblique plates than through the plurality of through holes provided in each of the side plates. Thus, the aperture ratios of the side plate, the oblique plate, and the bottom plate are larger in this order. Therefore, it is possible for the fluid to efficiently drain through the plurality of through holes provided in the side plates, the plurality of through holes provided in the oblique plates, and the plurality of through holes provided in the bottom plate.

The bottom-plate aperture ratio may be not less than 10% and not more than 50%. According to the above configuration, it is possible to both maintain a sufficient strength of the bottom plate and make it easy for a fluid to drain through the plurality of through holes provided in the bottom plate.

The oblique-plate aperture ratio may be not less than 60% and not more than 100% of the bottom-plate aperture ratio. According to the above configuration, it is possible to make it easier for a fluid to drain through the plurality of through holes provided in the bottom plate than through the plurality of through holes provided in each of the oblique plates, while sufficient strengths of the oblique plates are maintained.

The side-plate aperture ratio may be not less than 10% and not more than 60% of the bottom-plate aperture ratio. According to the above configuration, it is possible to make it easier for a fluid to drain through the plurality of through holes provided in the bottom plate than through the plurality of through holes provided in each of the side plates, while sufficient strengths of the side plates are maintained.

The plurality of through holes provided in the bottom plate may cause the upper surface of the bottom plate and a surface of the bottom plate opposite to the upper surface of the bottom plate to communicate with each other, and a distance between the upper surface of the bottom plate and the surface of the bottom plate opposite to the upper surface of the bottom plate may be not less than 1 mm and not more than 8 mm. According to the above configuration, since a sufficient thickness in a portion provided with the through holes is ensured for the bottom plate, a sufficient strength of the bottom plate is maintained. At the same time, it is possible to make it easy for a fluid to drain out of the cleaning basket through the plurality of through holes provided in the bottom plate.

The bottom plate may have a lower surface provided with recesses each forming a space that extends upwards from the lower surface of the bottom plate, and the recesses each may have an upper surface provided with a plurality of through holes formed therein, the plurality of through holes causing the upper surface of the recess and the upper surface of the bottom plate to communicate with each other. According to the above configuration, spaces are formed by the recesses, below the plurality of through holes provided in the bottom plate. Since a fluid that has drained through the plurality of through holes passes the spaces, it is possible for the fluid to efficiently drain out of the cleaning basket.

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

- 1, 1A, 1B, 1C: Cleaning basket
- 2, 2A, 2B, 2C: Bottom plate
- 3, 3A: Oblique plate
- 4, 5: Side plate
- 23: Upper surface of bottom plate
- 26, 26A, 26B: Upper surface of recess
- 24: Lower surface of bottom plate
- 25, 25A, 25B, 25C: Recess
- 33, 33A: Inner surface of side plate
- D1: Distance
- H2, H3, H4, H5: Through hole
- SP1: Accommodation space
- SP2: Space
- θ1: Angle

## Claims

1. A cleaning basket used for at least one of cleaning and drying of polycrystalline silicon in a state in which the polycrystalline silicon is accommodated in the cleaning basket, the cleaning basket comprising:
- a bottom plate provided with a plurality of through holes formed therein;
- oblique plates each of which has an inner surface that makes, with an upper surface of the bottom plate, an angle of not less than 10° and not more than 80°, the oblique plates each being connected to the bottom plate and inclining in an upward and outward direction; and
- side plates which are connected to the oblique plates and which extend in an upward direction,
- the bottom plate, the oblique plates, and the side plates forming an accommodation space accommodating the polycrystalline silicon.

2. The cleaning basket according to claim 1, wherein the oblique plates, as well as the bottom plate, are each provided with a plurality of through holes formed therein.

3. The cleaning basket according to claim 2, wherein a bottom-plate aperture ratio is not smaller than an oblique-plate aperture ratio, the bottom-plate aperture ratio being a ratio of a total of aperture areas of the plurality of through holes provided in the bottom plate relative to an area of the upper surface of the bottom plate, the oblique-plate aperture ratio being a ratio of a total of aperture areas of the plurality of through holes provided in each of the oblique plates relative to an area of an inner surface of each of the oblique plates.

4. The cleaning basket according to claim 3, wherein the side plates, as well as the bottom plate and the oblique plates, are each provided with a plurality of through holes formed therein.

5. The cleaning basket according to claim 4, wherein the oblique-plate aperture ratio is not smaller than a side-plate aperture ratio, which is a ratio of a total of aperture areas of the plurality of through holes provided in each of the side plates, relative to an area of an inner surface of each of the side plates.

6. The cleaning basket according to any one of claims 3 to 5, wherein the bottom-plate aperture ratio is not less than 10% and not more than 50%.

7. The cleaning basket according to any one of claims 3 to 6, wherein the oblique-plate aperture ratio is not less than 60% and not more than 100% of the bottom-plate aperture ratio.

8. The cleaning basket according to claim 5, wherein the side-plate aperture ratio is not less than 10% and not more than 60% of the bottom-plate aperture ratio.

9. The cleaning basket according to any one of claims 1 to 8, wherein:
- the plurality of through holes provided in the bottom plate cause the upper surface of the bottom plate and a surface of the bottom plate opposite to the upper surface of the bottom plate to communicate with each other; and
- a distance between the upper surface of the bottom plate and the surface of the bottom plate opposite to the upper surface of the bottom plate is not less than 1 mm and not more than 8 mm.

10. The cleaning basket according to any one of claims 1 to 9, wherein:
- the bottom plate has a lower surface provided with recesses each forming a space that extends upwards from the lower surface of the bottom plate; and
- the recesses each have an upper surface provided with a plurality of through holes formed therein, the plurality of through holes causing the upper surface of the recess and the upper surface of the bottom plate to communicate with each other.
